# EUROPÄISCHE PATENTSCHRIFT

(11) **EP 2 831 339 B1**
(45) Veröffentlichungstag und Bekanntmachung des Hinweises auf die Patenterteilung: **03.08.2016**
(21) Anmeldenummer: 13712219.8
(22) Anmeldetag: 22.03.2013
(51) Int. Cl.: D21G 1/00, D21F 3/08, D21G 1/02, C08J 3/20

(54) **VERFAHREN ZUR HERSTELLUNG EINES WALZENBEZUGS**
METHOD FOR PRODUCING A ROLL COVER
PROCÉDÉ DE FABRICATION D'UN REVÊTEMENT DE CYLINDRE

(30) Priorität: 30.03.2012 DE 102012205227
(43) Veröffentlichungstag der Anmeldung: 04.02.2015
(73) Patentinhaber: Voith Patent GmbH, 89522 Heidenheim (DE)
(72) Erfinder: GROHMANN, Franz, A-2671 Payerbach (AT); BREINEDER, Martin, A-2620 Natschbach (AT); BREINEDER, Thomas, A-2620 Natschbach (AT)
(86) Internationale Anmeldenummer: PCT/EP2013/056072
(87) Internationale Veröffentlichungsnummer: WO 2013/144013

(56) Entgegenhaltungen:
- EP-B1- 1 612 329
- DE-A1- 19 611 454

## Beschreibung

Die Erfindung betrifft ein Verfahren zur Herstellung eines Walzenbezugs zur Verwendung in einer Maschine zur Herstellung und/oder Veredelung einer Faserstoffbahn nach dem Oberbegriff von Anspruch 1.

Die Verwendung von faserverstärkten und mit Füllstoffen gefüllten Epoxydharzen für Kalanderbezüge und andere abriebsbeständige Walzenbezüge zur Anwendung in der Papierindustrie und ähnlichen Anwendungen ist bereits Stand der Technik.

Die verwendeten Anteile an Füllstoffen sind dabei immer ein Kompromiss zwischen den verschiedenen Anforderungen an den Bezug. Zur Erreichung einer möglichst hohen Abriebsbeständigkeit und des gewünschten hohen Druckmoduls ist ein möglichst hoher Füllgrad wünschenswert.

Durch die sich im Gebrauch einstellende Oberflächenrauhigkeit ist insbesondere die Menge an harten, abriebsbeständigen Füllstoffen in einer mittleren Korngröße von mehr als 0,5 µm begrenzt, da sonst eine zu raue Oberfläche entsteht, die die gewünschte Glättung des Papiers negativ beeinflusst.

Des Weiteren führt ein steigender Füllstoffgehalt ab gewissen Grenzen zu einer zunehmenden Versprödung des Materials und damit zu einem steigenden Risiko massiver Beschädigungen bei punktuellen Überlastungen oder beim Auftreten von thermischen Spannungen.

Beispielsweise ist es aus der EP 1 612 329 B1 bekannt, dass durch die Verwendung von Partikeln mit Korngrößen im ein- bis niedrigen dreistelligen Nanometer Bereich auch in Kombination mit größeren Partikeln diese Grenzen bis zu einem gewissen Ausmaß in die gewünschte Richtung verschoben werden können.

Eine essentielle Voraussetzung für die Erreichung der gewünschten Eigenschaften ist dabei eine möglichst gleichmäßige Verteilung der Füllstoffpartikel in der Matrix und vor allem die Vermeidung der Bildung von Agglomeraten.

Üblicherweise werden Füllstoffpartikel, insbesondere Füllstoffpartikel mit mittleren Korngrößen im Bereich von 1 bis 100 nm (D50), mittels verschiedener Verfahren wie beispielsweise dem Sol-Gel-Prozess, durch spezielle Vermahlungsprozesse oder durch Deposition aus Gasphasen hergestellt und dann in die Harzmatrix oder deren monomere oder oligomere Vorstufen eingemischt.

Nachdem das Auftreten von Agglomeraten von Füllstoffpartikeln während der Herstellung von Produkten aus gefüllten Verbundwerkstoffen nur unzureichend oder nicht mit vertretbarem Aufwand im Rahmen der Qualitätssicherung überwacht werden kann, ist es Aufgabe der Erfindung, ein Verfahren zur Herstellung eines Walzenbezuges anzugeben, bei welchem die Agglomeration der Füllstoffpartikel nicht oder nur in geringem Ausmaß auftritt.

Erfindungsgemäß ist dabei vorgesehen, dass die Füllstoffpartikel in einer Komponente der Harzmatrix hergestellt und/oder aus einer Suspension über einen Matrixtausch in die Harzmatrix eingebracht werden, wodurch die Füllstoffpartikel durch Modifikation der Oberfläche in ihrer Agglomerationsneigung eingeschränkt werden. Dadurch kann eine stabile Suspension entstehen, in welcher die Füllstoffpartikel gleichmäßig verteilt sind.

Solcher Art hergestellte Suspensionen von Matrixmaterial mit Füllstoffpartikeln sind meist für längere Zeit lagerstabil und können in der Qualitätssicherung z.B. über die Kombination von verschiedenen recht einfach zu messenden Kriterien wie Dichte, Viskosität oder Opazität ausreichend überwacht werden, um Fehlchargen zu erkennen.

Die Verwendung von solchermaßen stabilisierten Füllstoffpartikeln in einer Harzmatrix, die direkt für die Herstellung von Duroplasten verwendet werden kann, hat daher enorme Vorteile in der Prozesssicherheit im Vergleich zur direkten Einmischung von Füllstoffpartikeln in eine Harzmischung, insbesondere, wenn zusätzlich auch andere, größere Füllstoffe verwendet werden.

Weitere Vorteile und Weiterbildungen der Erfindung sind in den Unteransprüchen angegeben.

Vorteilhafterweise kann der Partikel enthaltende Füllstoff in einem Sol-Gel-Verfahren durch Hydrolyse in Gegenwart von oberflächenaktiven Stoffen in einem Lösungsmittel gefällt werden.

Besonders vorteilhaft kann der Füllstoff durch Hydrolyse von Tetraethoxysilan mittels wässriger Ammoniaklösung in Gegenwart von nicht ionischen Tensiden in Form einer Wasser-in-Öl-Emulsion direkt in Hexan gefällt werden.

Nachfolgend der Fällungsreaktion kann gemäß einer bevorzugten Ausführungsform des Verfahrens durch schrittweise Zugabe einer der Polymerkomponenten und Verdampfen des Lösungsmittels die flüssige Phase vom Lösungsmittel zu der Polymerkomponente geändert werden.

Alternativ kann nachfolgend der Fällungsreaktion durch kontinuierliche Zugabe einer der Polymerkomponente und gleichzeitiges Verdampfen des Lösungsmittels die flüssige Phase vom Lösungsmittel zu der Polymerkomponente geändert werden.

Gemäß einem weiteren vorteilhaften Aspekt der Erfindung kann auch vorgesehen sein, dass die Herstellung der Füllstoffpartikel in einer Polymerkomponente der Harzmatrix erfolgt, indem eine Fällungsreaktion direkt in einer Polymerkomponente der Harzmatrix durchgeführt wird.

Weiterhin kann das Verfahren zusätzlich oder alternativ den Schritt einer Oberflächenmodifikation der Füllstoffpartikel in einer Polymerkomponente der Harzmatrix vorsehen. Dadurch kann die Anbindung der Füllstoffpartikel an die Polymerkomponente der Harzmatrix verbessert werden.

Bevorzugt kann die Modifikation der Oberfläche von SiO₂ enthaltenden Füllstoffpartikeln mittels Epoxysilan oder poly (L-lactinid) erfolgen.

Vorzugsweise weisen die Füllstoffpartikel mittlere Korngrößen im Nanometerbereich (1 bis 100 nm (D50)) auf.

Gemäß vorteilhafter Ausgestaltung der Erfindung können die Füllstoffpartikel ausgewählt sein aus: Oxide, Carbide, Nitride, Aluminiumsilikate, Silikate, Sulfate, Karbonate, Phosphate, Titanate, Carbonanotubes, Carbonanofibres, Metalle vorzugsweise synthetischen Ursprungs oder Mischungen davon.

Gemäß einer vorteilhaften Weiterbildung der Erfindung können die Füllstoffpartikel oberflächenmodifiziert sein, insbesondere mit poly (L-lactinid) gecoatetes SiO₂. Dadurch wird eine verbesserte Anbindung an die Harzmatrix erzielt.

Vorteilhafterweise kann die Harzmatrix ein Duroplast, insbesondere ein aminisch oder anhydridisch vernetztes oder ein selbstvernetzendes Epoxydharz oder ein Isocyanatester oder Mischungen daraus umfassen.

Bevorzugt kann der Gehalt an Füllstoffen in der Harzmatrix zwischen 0,5 und 30 Volumenprozent betragen. Dadurch sind die gewünschten Eigenschaften des Walzenbezuges erzielbar, ohne dass der Walzenbezug versprödet.

Die Erfindung wird nachfolgend näher erläutert.

Kalander oder Glättwerke für Faserstoffbahnen wie Papier- oder Kartonbahnen haben die Aufgabe, die Faserstoffbahn entweder direkt im Anschluss an deren Herstellung (online) oder auch zu einem späteren Zeitpunkt (offline) zu glätten. Durch diese Aufgabe werden an die Walzenbezüge der in einem Kalander vorhandenen Walzen höchste Anforderungen einerseits in Bezug auf ihre Oberflächengüte und andererseits in Bezug auf ihre Beständigkeit gegen thermische und mechanische Belastungen gestellt.

Gewöhnlich sind in einem Kalander mehrere Walzen zu einem Stack angeordnet, wobei gemäß einer geläufigen Ausführungsform eine metallische beheizbare Walze gegen eine nicht beheizte elastische Walze unter Bildung eines Nips läuft. Zunächst wird in mehreren aufeinanderfolgenden Nips eine erste Seite der Faserstoffbahn durch Druck- und Wärmeeinwirkung geglättet. Bei einem Superkalander oder Multinipkalander ist gewöhnlich etwa in der Mitte des Stacks ein sog. Wechselnip vorgesehen, nach welchem die andere Seite der Faserstoffbahn mit den glättenden Heizwalzen in Kontakt tritt.

Die Walzenbezüge der nicht beheizten Walzen bestehen gewöhnlich aus zumindest einer, oft auch aus mehreren Schichten aus diversen Materialen wie Gummi, Polyurethan oder faserverstärkten Kunststoffen, welche auf einen Walzenkörper aufgebracht werden. Für die Anwendung im Kalander sind gewöhnlich faserverstärkte Kunststoffe das Material der Wahl, da sie eine hohe Temperaturbeständigkeit sowie eine hohe mechanische Festigkeit und eine gute Abriebsbeständigkeit aufweisen.

Derartige Kunststoffe weisen gewöhnlich eine Harzmatrix sowie eine darin eingebettete Faserverstärkung aus Glas-, Kohle- oder Aramidfasern oder ähnlichen anderen geeigneten Fasern als Armierung auf. Die Herstellung derartiger Walzenbezüge ist hinlänglich bekannt, so dass hier nur eine kurze Zusammenfassung gegeben wird.

Die Herstellung kann gemäß diversen bekannten Verfahren erfolgen. Es ist einerseits möglich, die Fasern trocken zu wickeln und die Harzmatrix durch ein Gießverfahren aufzubringen. Ein anderes gängiges Verfahren sieht vor, dass Faserbündel, beispielsweise sog. Rovings, durch ein Harzbad, welches die Harzmatrix enthält, gezogen und dann nass auf den Walzenkörper gewickelt werden. Auch Spritzgussverfahren, bei welchen das Matrixmaterial durch axial verfahrbare Düsen auf einen rotierenden Walzenkörper aufgebracht wird, sind bekannt und zur Herstellung eines erfindungsgemäßen Walzenbezuges geeignet.

Der Aufbau kann dabei ein- oder mehrschichtig erfolgen, es können auch weitere Schichten wie beispielsweise ein Baselayer, der der Haftvermittlung zwischen Walzenkern und Walzenbezug dient, und zusätzliche Bindeschichten vorgesehen sein. Die erfindungsgemäßen Maßnahmen beziehen sich auf eine Funktionsschicht des Walzenbezuges, die mit der Faserstoffbahn in Kontakt kommt.

Für die Harzmatrix kommen aminisch oder anhydridisch vernetzte, aber auch selbstvernetzende Epoxydharze, Isocyanatester oder andere Duroplaste oder Mischungen daraus in Frage.

In allen Verfahren ist es möglich und üblich, die Harzmatrix mit Füllstoffen zu füllen, um so ihre mechanischen und thermischen Eigenschaften zu verbessern.

Für die erfindungsgemäß dispergierten Füllstoffe mit Korngrößen im Nanometerbereich kommen Oxide, Carbide, Nitride, Aluminiumsilikate, Silikate vorzugsweise synthetischen Ursprungs, aber auch Sulfate, Karbonate, Phosphate, Titanate, Carbonanotubes, Carbonanofibres, Metalle oder Mischungen daraus in Frage.

Die Füllstoffpartikel können mit oder ohne Oberflächenmodifikation, z.B. mit poly L-lactide gecoatetem SiO₂ zur besseren Anbindung an die Harzmatrix verwendet werden.

Wesentlich dabei ist, dass die Füllstoffpartikel in der Harzmatrix hergestellt und/oder aus einer anderen Suspension über einen Matrixtausch in die Harzmatrix eingebracht wurden. Alternativ kann anschließend an die Einmischung auch eine Oberflächenmodifikation der Füllstoffpartikel in der Suspension erfolgen.

Es sind verschiedene Verfahren hierfür denkbar, die im Folgenden vorgestellt werden.

Beispielsweise kann nanoskaliges Siliziumoxid in einem Sol-Gel Verfahren durch Hydrolyse von Silanen, z.B. Tetraethoxysilan beispielsweise mittels wässriger Ammoniaklösung in Gegenwart von oberflächenaktiven Stoffen, z.B. nicht ionischen Tensiden, in Form einer Wasser in Öl Emulsion beispielsweise direkt in Hexan oder einem anderen geeigneten Lösungsmittel gefällt werden. Die Partikel werden dabei durch eine Hüllschicht aus Tensiden stabilisiert und weisen dadurch eine gleichmässige Korngröße und eine extrem geringe Agglomerationsneigung auf. Durch schrittweise Zugabe einer der Polymerkomponenten und Verdampfen von Hexan wird die flüssige Phase von Hexan zu der Polymerkomponente geändert, ohne dass die nanoskaligen Partikel abgetrennt und neu dispergiert werden müssen. Dieses Herstellungsverfahren wird auch als Matrixtausch bezeichnet.

Alternativ kann die Zugabe der Polymerkomponente und das Verdampfen des Lösungsmittels kontinuierlich und gleichzeitig erfolgen.

Bei einem weiteren Verfahren kann die oben beschriebene Fällungsreaktion direkt in der gewählten Polymerkomponente durchgeführt werden. Dann entfällt der Schritt des Matrixtausches.

Bei einem weiteren vorteilhaften Verfahren werden nach einem der bekannten Verfahren gewonnene Nanopartikel in einem Lösungsmittel oder einer Polymerkomponente dispergiert, und anschließend wird eine Oberflächenmodifikation durchgeführt. Auch dadurch kann die Agglomerierungsneigung der Partikel reduziert werden.

Es ist jedoch prinzipiell auch möglich, Partikel, deren Agglomerationsneigung durch eine Modifikation der Patrikeloberfläche beispielsweise mittels Epoxy funktionalisierten Silanen oder poly (L-lactinid) verringert worden ist, ohne Matrixtausch direkt in die Harzmatrix einzumischen. Durch die Oberflächenmodifikation kann zusätzlich die Anbindung an die Matrix verbessert und damit die Wirksamkeit der Partikel erhöht werden.

Weiterhin können in die Suspension weitere Füllstoffpartikel insbesondere mit anderen mittleren Korngrößen eingebracht werden, um das Eigenschaftsprofil des Walzenbezugs entsprechend zu modellieren.

## Patentansprüche

1. Verfahren zur Herstellung eines Walzenbezug, insbesondere zur Verwendung in einer Maschine zur Herstellung und/oder Verarbeitung einer Faserbahn wie einer Papier- oder Kartonbahn, wobei der Walzenbezug zumindest eine aus einer Harzmatrix bestehende Schicht umfasst, welche mit zumindest einem Partikel enthaltenen Füllstoff gefüllt ist, **dadurch gekennzeichnet, dass** die Füllstoffpartikel in einer Komponente der Harzmatrix hergestellt und/oder aus einer Dispersion über einen Matrixtausch in eine Polymerkomponente der Harzmatrix eingebracht werden.

2. Verfahren nach Anspruch 1, **dadurch gekennzeichnet, dass** der Partikel enthaltende Füllstoff in einem Sol-Gel-Verfahren durch Hydrolyse in Gegenwart von oberflächenaktiven Stoffen in einem Lösungsmittel gefällt wird.

3. Verfahren nach Anspruch 2, **dadurch gekennzeichnet, dass** der Füllstoff durch Hydrolyse von Tetraethoxysilan mittels wässriger Ammoniaklösung in Gegenwart von nicht ionischen Tensiden in Form einer Wasser-in-Öl-Emulsion direkt in Hexan gefällt wird.

4. Verfahren nach Anspruch 2 oder 3, **dadurch gekennzeichnet, dass** nachfolgend der Fällungsreaktion durch schrittweise Zugabe einer der Polymerkomponenten und Verdampfen des Lösungsmittels die flüssige Phase vom Lösungsmittel zu der Polymerkomponente geändert wird.

5. Verfahren nach Anspruch 2 oder 3, **dadurch gekennzeichnet, dass** nachfolgend der Fällungsreaktion durch kontinuierliche Zugabe einer der Polymerkomponente und gleichzeitiges Verdampfen des Lösungsmittels die flüssige Phase vom Lösungsmittel zu der Polymerkomponente geändert wird.

6. Verfahren nach Anspruch 1 oder 2, **dadurch gekennzeichnet, dass** die Herstellung der Füllstoffpartikel in einer Polymerkomponente der Harzmatrix erfolgt, indem eine Fällungsreaktion direkt in einer Polymerkomponente der Harzmatrix durchgeführt wird.

7. Verfahren nach einem der vorstehenden Ansprüche, **dadurch gekennzeichnet, dass** das Verfahren zusätzlich oder alternativ den Schritt einer Oberflächenmodifikation der Füllstoffpartikel in einer Polymerkomponente der Harzmatix vorsieht.

8. Verfahren nach Anspruch 7, **dadurch gekennzeichnet, dass** die Modifikation der Oberfläche von SiO₂ enthaltenden Füllstoffpartikeln mittels Epoxysilan oder poly (L-lactinid) erfolgt.

9. Verfahren nach einem der Ansprüche 1 bis 8, **dadurch gekennzeichnet, dass** die Füllstoffpartikel ausgewählt sind aus: Oxide, Carbide, Nitride, Aluminiumsilikate, Silikate, Sulfate, Karbonate, Phosphate, Titanate, Carbonanotubes, Carbonanofibres, Metalle vorzugsweise synthetischen Ursprungs oder Mischungen davon.

10. Verfahren nach einem der Ansprüche 1 bis 9, **dadurch gekennzeichnet, dass** die Füllstoffpartikel in einer Korngröße von 1 bis 100 nm (D50) vorliegen.

11. Verfahren nach einem der Ansprüche 1 bis 10, **dadurch gekennzeichnet, dass** die Harzmatrix ein Duroplast, insbesondere ein aminisch oder anhydridisch vernetztes oder ein selbstvernetzendes Epoxydharz oder ein Isocyanatester oder Mischungen daraus umfasst.

12. Verfahren nach einem der Ansprüche 1 bis 11, **dadurch gekennzeichnet, dass** der Gehalt an Füllstoffen in der Harzmatrix zwischen 0,5 und 30 Volumenprozent beträgt.

## Claims

1. Method of producing a roll cover, in particular for use in a machine for producing and/or processing a fibrous web such as a web of paper or of board, wherein the roll cover comprises at least one layer consisting of a resin matrix and filled with at least one particulate filler, **characterized in that** the filler particles are produced in a component of the resin matrix and/or introduced into a polymer component of the resin matrix from a dispersion via matrix exchange.

2. Method according to Claim 1, **characterized in that** the particulate filler is precipitated in a solvent in a sol-gel process by hydrolysis in the presence of surfactants.

3. Method according to Claim 2, **characterized in that** the filler is precipitated directly in hexane by hydrolysis of tetraethoxysilane with aqueous ammonia solution in the presence of nonionic surfactants in the form of a water-in-oil emulsion.

4. Method according to Claim 2 or 3, **characterized in that** the precipitation reaction is followed by stepwise admixture of one of the polymer components and evaporation of the solvent to change the liquid phase from the solvent to the polymer component.

5. Method according to Claim 2 or 3, **characterized in that** the precipitation reaction is followed by continuous admixture of one of the polymer components and simultaneous evaporation of the solvent to change the liquid phase from the solvent to the polymer component.

6. Method according to Claim 1 or 2, **characterized in that** the filler particles are produced in a polymer component of the resin matrix by conducting a precipitation reaction directly in a polymer component of the resin matrix.

7. Method according to any preceding claim, **characterized in that** said method additionally or alternatively provides the step of surface modifying the filler particles in a polymer component of the resin matrix.

8. Method according to Claim 7, **characterized in that** the surface modification of SiO₂-containing filler particles is effected with epoxysilane or poly(L-lactide).

9. Method according to any of Claims 1 to 8, **characterized in that** the filler particles are selected from: oxides, carbides, nitrides, aluminosilicates, silicates, sulfates, carbonates, phosphates, titanates, carbonanotubes, carbonanofibers, metals of preferably synthetic origin or mixtures thereof.

10. Method according to any of Claims 1 to 9, **characterized in that** the filler particles are present in a particle size of 1 to 100 nm (D50).

11. Method according to any of Claims 1 to 10, **characterized in that** the resin matrix comprises a thermoset, in particular an amine- or anhydride-crosslinked or self-crosslinking epoxy resin or an isocyanate ester or mixtures thereof.

12. Method according to any of Claims 1 to 11, **characterized in that** the filler content of the resin matrix is between 0.5 and 30 volume percent.

## Revendications

1. Procédé de fabrication d'un revêtement de cylindre, notamment pour une utilisation dans une machine pour la fabrication et/ou l'usinage d'une bande de fibres telle qu'une bande de papier ou de carton, le revêtement de cylindre comprenant a moins une couche constituée d'une matrice de résine, qui est chargée avec au moins une charge contenant des particules, **caractérisé en ce que** les particules de charge sont fabriquées dans un composant de la matrice de résine et/ou sont introduites dans un composant polymère de la matrice de résine à partir d'une dispersion par un échange de matrices.

2. Procédé selon la revendication 1, **caractérisé en ce que** la charge contenant des particules est précipitée dans un procédé sol-gel par hydrolyse en présence de substances tensioactives dans un solvant.

3. Procédé selon la revendication 2, **caractérisé en ce que** la charge est précipitée par hydrolyse de tétraéthoxysilane au moyen d'une solution aqueuse d'ammoniac en présence de tensioactifs non ioniques sous la forme d'une émulsion eau dans huile directement dans de l'hexane.

4. Procédé selon la revendication 2 ou 3, **caractérisé en ce qu'**après la réaction de précipitation, la phase liquide est modifiée du solvant au composant polymère par ajout graduel d'un des composants polymères et évaporation du solvant.

5. Procédé selon la revendication 2 ou 3, **caractérisé en ce qu'**après la réaction de précipitation, la phase liquide est modifiée du solvant au composant polymère par ajout continu d'un des composants polymères et évaporation simultanée du solvant.

6. Procédé selon la revendication 1 ou 2, **caractérisé en ce que** la fabrication des particules de charge a lieu dans un composant polymère de la matrice de résine, par réalisation d'une réaction de précipitation directement dans un composant polymère de la matrice de résine.

7. Procédé selon l'une quelconque des revendications précédentes, **caractérisé en ce que** le procédé prévoit en outre ou en variante l'étape d'une modification de surface des particules de charge dans un composant polymère de la matrice de résine.

8. Procédé selon la revendication 7, **caractérisé en ce que** la modification de la surface de particules de charge contenant SiO₂ a lieu au moyen d'époxysilane ou de poly(L-lactinide).

9. Procédé selon l'une quelconque des revendications 1 à 8, **caractérisé en ce que** les particules de charge sont choisies parmi : les oxydes, les carbures, les nitrures, les silicates d'aluminium, les silicates, les sulfates, les carbonates, les phosphates, les titanates, les nanotubes de carbone, les nanofibres de carbone, les métaux de préférence d'origine synthétique ou leurs mélanges.

10. Procédé selon l'une quelconque des revendications 1 à 9, **caractérisé en ce que** les particules de charge sont présentes en une taille de grain de 1 à 100 nm (D50).

11. Procédé selon l'une quelconque des revendications 1 à 10, **caractérisé en ce que** la matrice de résine comprend un duroplaste, notamment une résine époxyde réticulée par une amine ou un anhydride ou auto-réticulante ou un ester d'isocyanate ou leurs mélanges.

12. Procédé selon l'une quelconque des revendications 1 à 11, **caractérisé en ce que** la teneur en charges de la matrice de résine est comprise entre 0,5 et 30 pour cent en volume.
